# EUROPÄISCHE PATENTANMELDUNG

(11) **EP 0 539 874 A1**
(43) Veröffentlichungstag der Anmeldung: **05.05.1993**
(21) Anmeldenummer: 92118141.8
(22) Anmeldetag: 23.10.1992
(51) Int. Cl.: B01D 33/073, B01D 33/37, B01D 33/48, B01D 33/68, B01D 33/72, B01D 29/15, B01D 29/33, B01D 29/52, B01D 29/66, B01D 29/86, B01D 29/90

(54) **Filterapparat zum Trennen der Feststoffpartikel aus einer Flüssigkeit**

(30) Priorität: 26.10.1991 DE 4135359
(71) Anmelder: HRCH. HUPPMANN GmbH MASCHINENFABRIK, D-97318 Kitzingen (DE)
(72) Erfinder: Nuffer, Leo, Dipl.-Ing. (FH), W-8714 Wiesentheid (DE)
(74) Vertreter: Fuchs, Richard (DE)

(57) **Zusammenfassung**

Bei bekannten Filterapparaten bestehen die Filterelemente aus konzentrisch angeordneten Hohlzylindern mit doppelter Wandung, welche die einzelnen Filterkammern begrenzen. An den Außenseiten der beiden Wandungen eines jeden Hohlzylinders sind einzelne Filterüberzüge in Form von Filtertüchern befestigt, was jedoch umständlich ist. Insbesondere die einwandfreie Befestigung der Filtertücher an den Außenseiten der jeweils inneren Wandungen der Hohlzylinder bereitet Schwierigkeiten. Um diese Nachteile zu vermeiden, bestehen die Filterelemente erfindungsgemäß aus zahlreichen Filterröhren (16) relativ kleinen Querschnitts und die Filterüberzüge z.B. aus Filterstrümpfen (20), welche auf die Filterröhren (16) aufgezogen und mittels ringförmiger Befestigungselemente fixiert werden. Die Filterröhren (16) sind in Umfangsrichtung in Abstand voneinander auf verschiedenen Radien an ringförmigen hohlen Tragkonstruktionen (22, 23) befestigt. Diese Tragkonstruktionen (22, 23) sind vorzugsweise gegenläufig drehbar, eine derselben kann jedoch auch ortsfest im Druckbehälter (10) des Filterapparats angeordnet sein.

## Beschreibung

Die Erfindung bezieht sich auf einen Filterapparat zum Trennen der Feststoffpartikel aus einer Flüssigkeit, mit einem Druckbehälter, in dem hohle, mit einem Filterüberzug versehene Filterelemente zur Aufnahme und Ableitung des Filtrats ineinandergeschachtelt angeordnet sind, von welchen wenigstens ein Teil um die lotrechte Achse des Druckbehälters drehbar gelagert und motorisch antreibbar ist.

Ein derartiger Filterapparat ist durch die europäische Patentanmeldung Nr. 88 119 066.4 bekannt. Bei diesem Filterapparat bestehen die hohlen Filterelemente aus doppelwandigen, konzentrisch angeordneten Hohlzylindern, welche jeweils mit einem Stirnende an einer umlaufenden oder ortsfesten Tragkonstruktion befestigt sind. Die beiden Wandungen eines jeden Hohlzylinders sind perforiert und begrenzen jeweils eine Kammer zur Aufnahme und Ableitung des Filtrats. Die Tragkonstruktionen für diese hohlzylinderförmigen Filterelemente sind hohl ausgebildet und dienen daher zugleich der Ableitung des Filtrats aus dem Druckbehälter. An den Außenseiten der beiden Wände eines jeden Hohlzylinders sind in Nuten Filterüberzüge in Form von Filtertüchern mittels elastischer Spannelemente befestigt. Diese Befestigungsmethode erschwert jedoch die Montage und auch Demontage bei einem erforderlichen Austausch der Filtertücher, was insbesondere für die auf den inneren Wänden der Hohlzylinder anzubringenden Filtertücher gilt. Hier ist es nämlich besonders schwierig, die Filtertücher ohne Faltenbildung im gespannten Zustand zu montieren. Auch können sich gerade diese Filtertücher an den Innenwänden der Hohlzylinder beim sog. Rückspülen im Verlauf von Reinigungsarbeiten leicht lösen und beschädigt werden.

Der Erfindung liegt daher die Aufgabe zugrunde, die obigen Mängel zu beseitigen und einen leistungsfähigeren Filterapparat zu schaffen, bei dem die Filterüberzüge einfach und schnell montiert und demontiert werden können und im montierten Zustand stets einen einwandfreien faltenfreien Sitz aufweisen. Auch soll eine Beschädigungsgefahr der Filterüberzüge beim sogenannten Rückspülen im Zuge von Reinigungsarbeiten zuverlässig vermieden werden. Schließlich sollen die Filterüberzüge und die Filterelemente, an welchen die Filterüberzüge angebracht werden, einfach und preiswerte Teile sein.

Gemäß der Erfindung wird obige Aufgabe dadurch gelöst, daß die Filterelemente aus Filterröhren mit einem relativ kleinen Querschnitt bestehen, die außen mit einem Filterüberzug umhüllt sind. Diese Filterröhren sind aus einem perforierten Material oder auch aus "Drahtgitterkörben" hergestellt, weisen jeweils einen relativ kleinen Querschnitt auf und begrenzen Filtratkammern zur Aufnahme und Ableitung des Filtrats. Die Filterüberzüge können einfach und schnell auf die Filterröhren faltenlos aufgezogen oder um diese gewickelt und mittels üblicher Befestigungsmittel an diesen fixiert werden. Im Bedarfsfall können die Filterüberzüge ebenso einfach und schnell von den Filterröhren abgenommen werden. Schließlich können die die Filterröhren umhüllenden Filterüberzüge auch problemlos durch sog. Rückspülen gereinigt werden, denn sie umschließen die Filterröhren mit festem Sitz. Die Filterröhren können, wie bei den vorstehend erläuterten bekannten Konstruktionen mit hohlzylindrischen Filterelementen großen Durchmessers teilweise an ortsfesten und rotierenden oder ausschließlich an rotierenden Tragkonstruktionen befestigt werden. Ferner können sie zusammen mit bekannten Rührwerken eingesetzt werden. Die Filterröhren mit einem relativ kleinen Querschnitt und die die Filterröhren umhüllenden Filterüberzüge sind außerdem preiswerte Teile. Der Filterapparat mit den erfindungsgemäßen Merkmalen ist ferner im Vergleich zu den bekannten Apparaten leistungsfähiger und kann z.B. in Sudhausanlagen bei der Bierherstellung an verschiedenen Stationen ebenso verwendet werden wie beispielsweise zur Abwasserfiltrierung oder für die verschiedensten Filtrierzwecke in der chemischen Industrie usw..

Ausgestaltungen der Erfindung gehen aus den Unteransprüchen hervor. So sind die Filterröhren vorzugsweise vertikal und in Umfangsrichtung in Abstand voneinander auf verschiedenen Radien angeordnet.

Wenn nach noch einer weiteren Ausgestaltung der Erfindung die Filterröhren gleichartig ausgebildet sind, erreicht man vorteilhaft eine vereinfachte Herstellung der Filterröhren und eröffnet die Möglichkeit, auch gleichartige Filterüberzüge in dem Filterapparat zu verwenden.

Nach noch einer weiteren Ausgestaltung der Erfindung können die Filterröhren über ihre gesamte Höhe einen abgeflachten ovalen, tropfenähnlichen oder auch kreisrunden Querschnitt aufweisen. An dieser Stelle sei angemerkt, daß die Filterröhren bei rotierender Anordnung zugleich Rührorgane zur Erzeugung von Querströmungen im Druckbehälter bilden.

Nach noch einer weiteren Ausgestaltung der Erfindung können die Filterröhren aus Lochblech hergestellt und an ihren Enden mittels eines Deck- und Bodenelements verschlossen werden, wobei im Deck- oder Bodenelement wenigstens eine Ableitung für das Filtrat vorgesehen ist.

In weiterer Ausgestaltung der Erfindung können die Filterröhren mit ihrem einen die Ableitung(en) für das Filtrat enthaltenden Ende an ringförmigen hohlen Tragkonstruktionen unterschiedlichen Durchmessers befestigt sein, die jeweils über hohle Streben mit einer Hohlwelle bzw. hohlen Achse zur Ableitung des Filtrats verbunden sind. Dabei können die Filterröhren einfach auswechselbar an den ringförmigen Tragkonstruktionen angeschraubt sein.

Eine besonders einfache und schnelle Befestigung der Filterüberzüge erreicht man, wenn nach noch einer weiteren Ausführungsform der Erfindung die Filterüberzüge als Filterstrümpfe ausgebildet sind. Diese fertig konfektionierten Filterstrümpfe können an einem Ende fabrikmäßig verschlossen sein, so daß sie nach dem Aufziehen auf die Filterröhren nur noch mit ihrem anderen Ende an den Filterröhren fixiert werden müssen.

Nach noch einer weiteren Ausgestaltung der Erfindung können die Filterstrümpfe an beiden Enden offen und wenigstens an den oberen und unteren Enden der Filterröhren mittels ringförmiger Befestigungselemente, z.B. in der Art von Spannschellen bzw. Spannbänder fixiert sein.

Nach noch einer weiteren Ausgestaltung der Erfindung können die Filterüberzüge aus einem um die Filterröhren gewickelten Filtertuch bestehen, welches an den oberen und unteren Enden der Filterröhren mittels ringförmiger Befestigungselemente und an seinem außenliegenden Längsrand durch eine achsparallel zur Filterröhre angeordnete Verschlußschiene gehalten ist.

Eine weitere Ausbildung der Erfindung ist dadurch gekennzeichnet, daß in dem Druckbehälter mittig und parallel zu den Filterröhren ein Rohr relativ großen Durchmessers eingebaut ist, an dem außen der stationäre Teil der Filterröhren mittels Streben befestigt ist, während sich der drehbar gelagerte Teil der Filterröhren auf einem von dem Rohr mittig getragenen Lager abstützt. Dadurch wird vorteilhaft ein zentraler Bereich im Druckbehälter, der für die Filterung ohnehin relativ wenig bringt, für eine konstruktive Verbesserung des Filterapparats genutzt.

Wenn nach noch einer weiteren Ausbildung der Erfindung das in dem Druckbehälter mittig eingebaute Rohr perforiert bzw. aus Lochblech hergestellt und gleichfalls außen mit einem Filterüberzug umhüllt ist und am unteren geschlossenen Ende des Rohres eine Ableitung für das Filtrat angeordnet ist, wird auch noch dieser mittlere Bereich des Filterapparats, wenn auch mit relativ geringer Ausbeute, für die Filtrierung genutzt.

Wenn nach noch einer weiteren Ausgestaltung der Erfindung die Einführung der zu filtrierenden Flüssigkeit in den Druckbehälter durch einen oder mehrere an der zylindrischen Außenwand des Druckbehälters tangential befestigte Zuleitungsstutzen erfolgt, können vorteilhaft Rührwerke oder dergleichen im Druckbehälter entfallen.

Zweckmäßig sind an der zylindrischen Außenwand des Druckbehälters mehrere Zuleitungsstutzen in verschiedener Höhe und in Umfangsrichtung voneinander beabstandet tangential angeordnet, wodurch der Verwirbelungseffekt für die zu filtrierende Flüssigkeit und damit die Filterleistung weiter erhöht werden.

Nach noch einer weiteren Ausbildung der Erfindung sind die Filterröhren an ihren den ringförmigen hohlen Tragkonstruktionen gegenüberliegenden Enden jeweils mit einem Stabilisierungsring verbunden.

Eine längere Standzeit wird erreicht, wenn der Filterüberzug an den Filterröhren aus einer Keramikschicht besteht.

Die Erfindung wird anschließend anhand der Zeichnungen von Ausführungsbeispielen erläutert. Es zeigen:

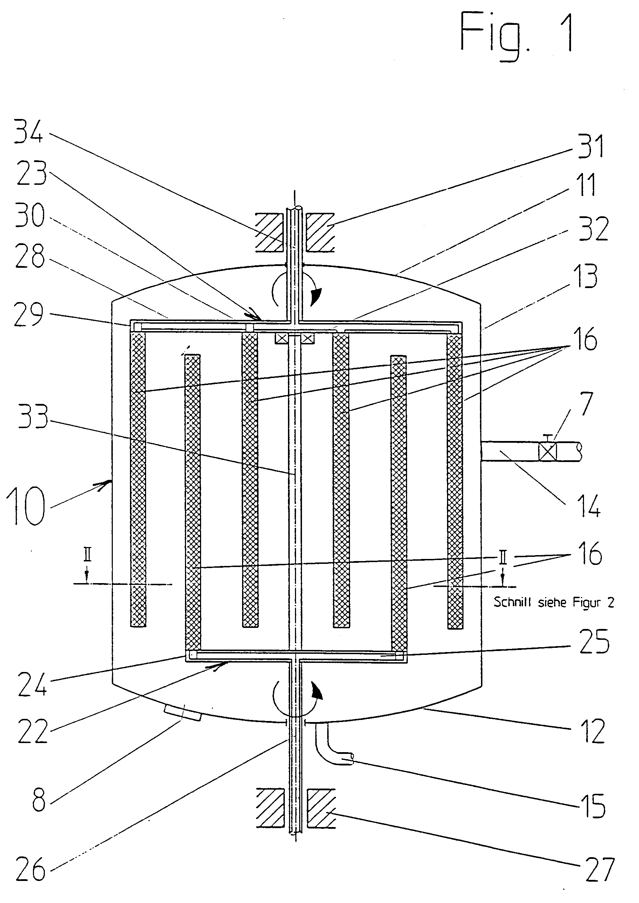

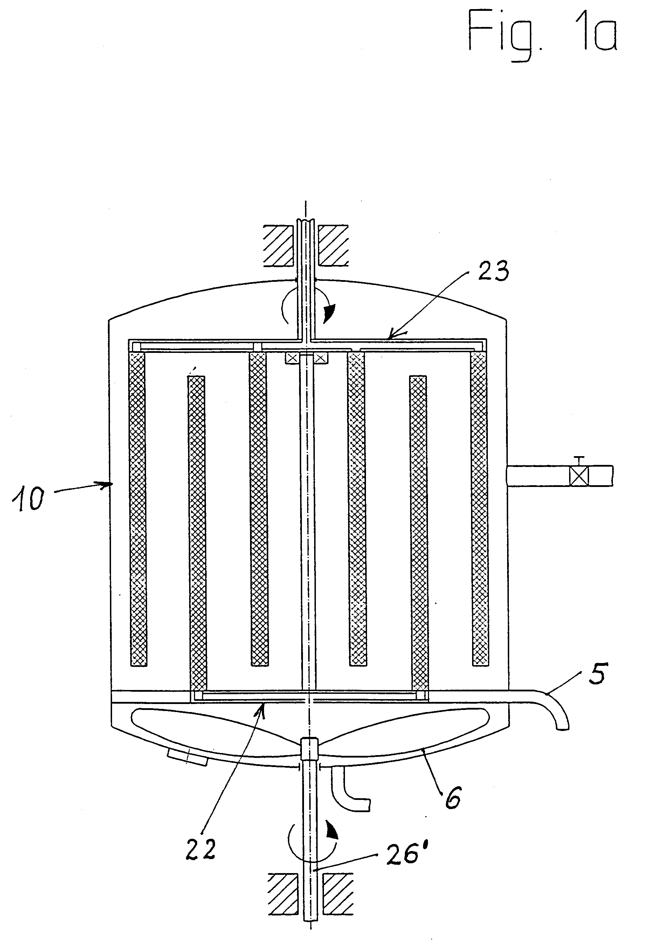

- Figur 1: einen Längsschnitt eines schematisch dargestellten Filterapparats gemäß der Erfindung;
- Figur 1 a: einen Längsschnitt eines Filterapparats entsprechend Figur 1, jedoch mit einem Rührorgan und einem Satz ortsfester Filterröhren;
- Figur 2: eine Querschnittsansicht entlang der Linie II - II in Figur 1;
- Figur 3: eine Seitenansicht von einer der in dem Filterapparat der Figuren 1 und 2 verwendeten Filterröhren, die beispielsweise mit einem Filterstrumpf umhüllt bzw. bespannt ist, welcher in strichpunktierten Linien und lediglich der besseren Darstellung wegen in einem gewissen Abstand von der Filterröhre angedeutet ist;
- Figur 4: eine Draufsicht auf die Filterröhre der Figur 3;
- Figug 5: einen Längsschnitt einer weiteren Ausführungsform des Filterapparats gemäß der Erfindung in schematischer Darstellung, wobei am Boden des Druckbehälters in gestrichelten Linien eine Ableitung für das Filtrat vorgesehen ist, wenn das mittig angeordnete Rohr mit relativ großem Durchmesser perforiert bzw. aus einem Lochblech hergestellt ist und

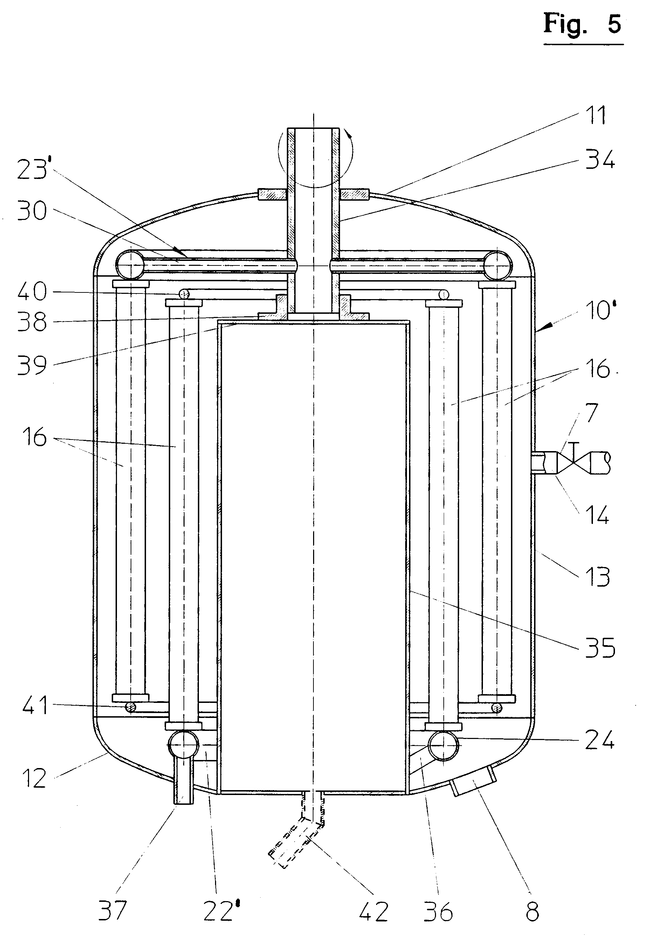

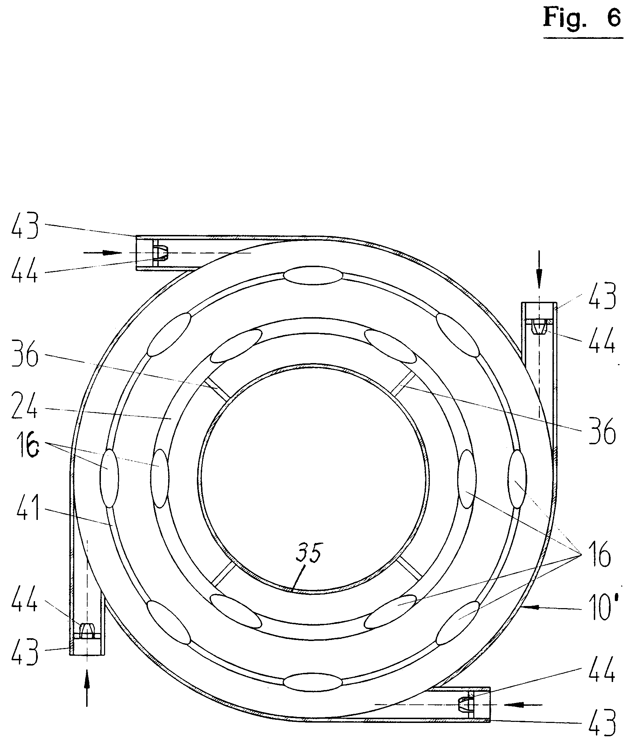

- Figur 6: eine Querschnittsansicht des in Figur 5 gezeigten Filterapparats, aus der insbesondere die Anordnung von vier Zuleitungsstutzen für die zu filtrierende Flüssigkeit tangential an der zylindrischen Außenwand des Druckbehälters hervorgeht.

Es wird nun auf Figur 1 Bezug genommen. Der Filterapparat zum Trennen der Feststoffpartikel aus einer diese Partikel enthaltenden Flüssigkeit weist einen Druckbehälter 10 mit kreisrundem Querschnitt auf, der mit einer oberen Stirnwand 11 und einer Bodenwand 12 versehen ist. Die zu filtrierende Flüssigkeit gelangt durch einen Zuleitungsstutzen 15 an der Bodenwand 12 in den Druckbehälter 10. Die während eines Filtriervorgangs im Druckbehälter 10 sich allmählich eindickende Flüssigkeit kann beim Erreichen eines gewissen Eindickungsgrades nach Beendigung des Filtriervorgangs über eine Ausbringöffnung 8 in der Bodenwand 12 aus dem Druckbehälter 10 abgelassen werden. An dieser Stelle sei bemerkt, daß der Filtriervorgang kontinuierlich oder auch intermittierend durchgeführt werden kann, wobei die kontinuierliche Arbeitsweise bevorzugt wird. Während eines kontinuierlichen Filtriervorgangs erfolgt der Ablauf der zunehmend mehr Feststoffpartikel enthaltenden (konzentrierten) Flüssigkeit über den Ablaufstutzen 14 am Behältermantel 13. In dem Ablaufstutzen 14 ist ein Drosselventil 7 eingebaut, welches der Druckregulierung im Druckbehälter 10 dient. Die Druckregulierung kann aber auch in der Flüssigkeits-Zuleitung erfolgen, welche am Zuleitungsstutzen 15 angeschlossen ist.

Die Filterelemente bestehen aus einzelnen vorzugsweise gleichartigen Filterröhren 16 mit beispielsweise einem abgeflachten ovalen Querschnitt. Die Filterröhren können aber auch einen anderen, z.B. tropfenähnlichen oder kreisrunden Querschnitt aufweisen. Jede einzelne Filterröhre 16 ist beim Ausführungsbeispiel aus einem entsprechend gebogenen Lochblech gefertigt. Die Enden der Filterröhren 16 sind durch je ein Deckelement 17 und Bodenelement 18 verschlossen. Je nach Anordnung (hängend oder stehend) der Filterröhren 16 im Druckbehälter 10 befindet sich im Deckelement 17 oder Bodenelement 18 eine Ableitung 19 für das Filtrat in Form eines Rohrstutzens.

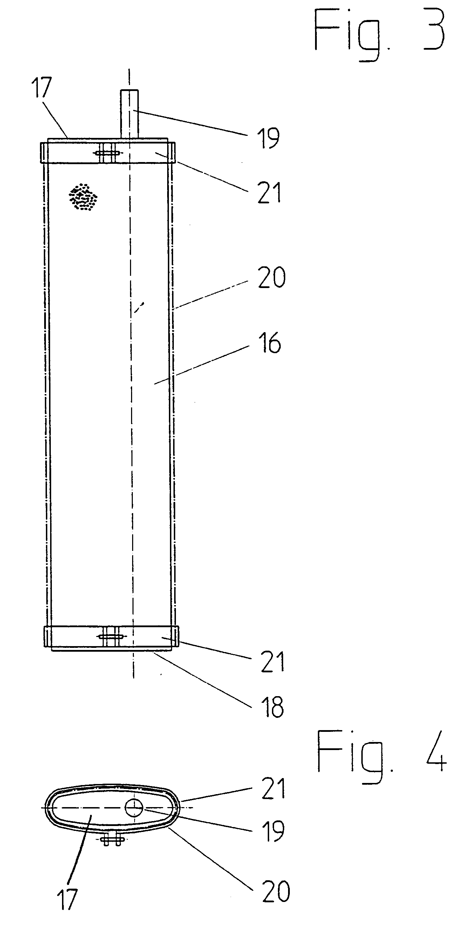

Auf jede Filterröhre 16 des Filterapparats ist ein zunächst an beiden Enden offener Filterstrumpf 20 aufgezogen, der in den Figuren 3 und 4 durch strichpunktierte Linien angedeutet ist. Letztere sind der besseren Darstellung wegen in einem gewissen Abstand von der Filterröhre 16 gezeigt, wobei in der Praxis jedoch der Filterstrumpf 20 an der Außenseite der Filterröhre 16 anliegt bzw. diese eng umschließt. Das obere und untere Ende des Filterstrumpfes 20 ist beispielsweise durch je eine Spannschelle 21 an der Filterröhre 16 fixiert. Es kann sich dabei um handelsübliche Spannschellen bzw. Spannbänder handeln, die durch Betätigen einer Schraube kontraktierbar sind.

Beim Ausführungsbeispiel nach Figur 1 und 1 a ist ein Satz von Filterröhren 16 an einer unteren Tragkonstruktion 22 stehend befestigt, die beispielsweise (Fig.1) drehbar gelagert und motorisch antreibbar ist. Diese Tragkonstruktion kann jedoch auch ortsfest im Druckbehälter 10 angeordnet sein (Fig.1a). Beispielsweise zwei weitere Sätze von Filterröhren 16 sind an einer oberen Tragkonstruktion 23 hängend festgemacht, welche beim Ausführungsbeispiel nach Fig. 1 und 1 a drehbar gelagert und motorisch antreibbar ist. In beiden Fällen sind die Antriebsmotore nicht gezeigt. Die Tragkonstruktionen 22 und 23 sind hohl ausgebildet und dienen gleichzeitig der Abführung des Filtrats, welches sich in den Innenräumen der Filterröhren 16 ansammelt, welche mit den Hohlräumen der Tragkonstruktionen 22 und 23 kommunizieren, was noch im einzelnen erläutert wird.

Die untere Tragkonstruktion 22 weist einen hohlen Ring 24 auf, der durch hohle Streben 25 mit einer Hohlwelle 26 (Fig.1) verbunden ist. Die Hohlräume des Ringes 24, der Streben 25 und der Hohlwelle 26 kommunizieren miteinander. Auf dem Ring 24 sind in Umfangsrichtung z.B. in gleichem in Abstand voneinander beispielsweise sechs Filterröhren 16 z.B. durch nicht gezeigte Schrauben so befestigt, daß ihre Ableitungen 19 (Figur 3) in den Hohlraum des Ringes 24 der Tragkonstruktion 22 münden. Die als Ableitung für das Filtrat dienende Hohlwelle 26 erstreckt sich abgedichtet durch die Bodenwand 12 des Druckbehälters 10, ist in einem Lager 27 gelagert und mit einem nicht gezeigten Antriebsmotor gekuppelt. Bei eingeschaltetem Antriebsmotor dreht sich die Hohlwelle 26 beispielsweise entgegen dem Uhrzeigersinn, wie in Figur 1 durch einen Pfeil angedeutet ist.

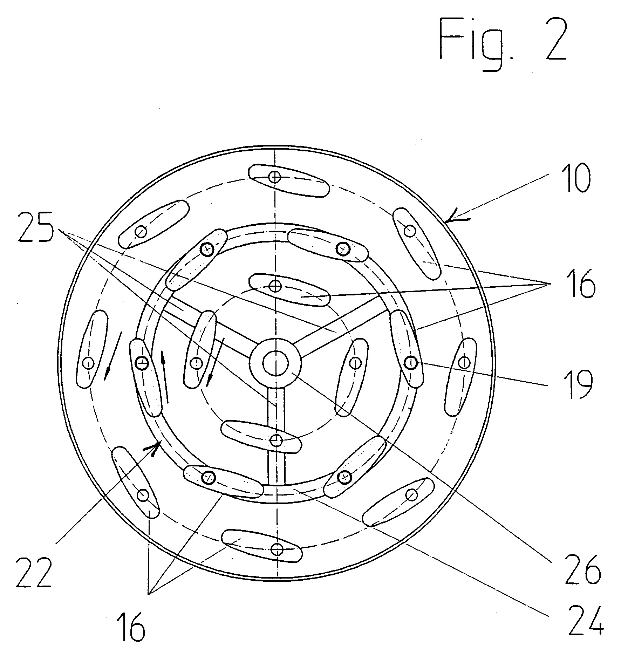

Die obere Tragkonstruktion 23 ist ähnlich der unteren Tragkonstruktion 22 aufgebaut, sie weist jedoch, wie in Figur 2 gezeigt, z.B. zwei konzentrisch angeordnete, hohle Ringe 29, 30 unterschiedlichen Durchmessers auf, welche an mehreren hohlen Streben 28 befestigt sind, die ihrerseits mit einer Hohlwelle 34 verbunden sind. Die Hohlräume der Ringe 29 und 30, der Streben 28 und der Hohlwelle 34 kommunizieren miteinander. Die Hohlwelle 34 erstreckt sich abgedichtet durch die obere Stirnwand 11 des Druckbehälters 10, ist in einem Lager 31 gelagert und mit einem nicht gezeigten Antriebsmotor gekuppelt. Die obere Tragkonstruktion 23 ist ferner beispielsweise auf einem in Figur 1 nur schematisch angedeuteten Axiallager 32 aufgelagert, das von einer an der Hohlwelle 26 achsgleich befestigten Stütze 33 getragen wird. An den hohlen Ringen 29 und 30 sind jeweils in Umfangsrichtung vorzugsweise in gleichem Abstand voneinander beispielsweise acht bzw. vier Filterröhren 16 so hängend befestigt, etwa durch nicht gezeigte Schrauben, daß ihre Ableitungen 19 in die Hohlräume der Ringe 29 und 30 einmünden. Bei eingeschaltetem Antriebsmotor werden die Hohlwelle 34 und damit die Tragkonstruktion 23 einschließlich der an ihr befestigten Filterröhren 16 gemäß Figur 1 vorzugsweise im Uhrzeigersinn, also gegenläufig zur Tragkonstruktion 22 und den an ihr befestigten Filterröhren 16 gedreht.

Aus der obigen Beschreibung und den Figuren 1 und 2 geht hervor, daß die Filterröhren 16 an der unteren Tragkonstruktion 22 und die Filterröhren 16 an der oberen Tragkonstruktion 23 auf verschiedenen Radien und, wie schon erwähnt, in Umfangsrichtung in Abstand voneinander angeordnet sind, wobei sich die Filterröhren 16 an der unteren Tragkonstruktion 22 zwischen den zwei Sätzen von Filterröhren 16 an der oberen Tragkonstruktion 23 befinden. Wenn die Filterröhren 16 an der unteren Tragkonstruktion 22 und der oberen Tragkonstruktion 23, wie oben erläutert, beispielsweise gegenläufig angetrieben werden, werden Querströmungen in der im Druckbehälter 10 befindlichen zu filternden Flüssigkeit erzeugt. Aufgrund dieser Querströmungen und des im Druckbehälter 10 herrschenden Überdrucks dringt ein flüssiger Anteil der zu filternden Flüssigkeit durch die Filterstrümpfe 20 und perforierten Filterröhren 16 in deren Innenräume, von wo aus das Filtrat über die hohlen Tragkonstruktionen 22 und 23 bzw. ihren Hohlwellen 26 und 34 aus dem Druckbehälter 10 abfließt und in einem nicht gezeigten Sammelbehälter eingeleitet werden kann. Die Feststoffpartikel werden von den Filterstrümpfen 20 abgefangen und bilden mit einem restlichen Flüssigkeitsanteil eine eingedickte Flüssigkeit, die über die Ausbringöffnung 8, wie schon erwähnt, aus dem Druckbehälter 10 abgelassen werden kann. Durch eine sog. Rückspülung, bei welcher ein Spülmedium in umgekehrter Richtung durch die hohlen Tragkonstruktionen 22 und 23 in die Hohlräume der Filterröhren 16 strömt, können letztere und die Filterstrümpfe 20 gereinigt werden.

In Abweichung vom Ausführungsbeispiel nach Figur 1 kann eine der Tragkonstruktionen 22 oder 23 auch ortsfest im Druckbehälter 10 eingebaut werden. In Figur 1 a ist beispielsweise die Tragkonstruktion 22 ortsfest. Zur Ableitung des Filtrats ist die hohle ortsfeste Tragkonstruktion 22 mit einem Ablaufrohr 5 verbunden. Ferner können an den Hohlstreben 25 und/oder 28 zusätzlich auch Rührorgane befestigt werden. Ein Rührorgan 6 ist in Figur 1 a beispielsweise an einer Welle 26' befestigt und wird folglich durch diese gedreht. Es ist aber auch möglich, die erforderlichen Querströmungen im Druckbehälter 10 durch ein sog. Pumpenrührwerk zu erzeugen, wobei dann das Rührorgan 6 entfallen kann.

Anstelle der Filterröhren 16 aus Lochblechen können z.B. auch entsprechende "Drahtgitterkörbe" verwendet werden, die ein aussteifendes Drahtgestell aufweisen. Die Zahlenangaben für die Filterröhren 16 sind nur beispielhaft und können, je nach Größe des Filterapparats, variieren. Dies gilt auch für die hohlen Ringe 24 bzw. 29 und 30 der Tragkonstruktionen 22 bzw. 23.

Statt der an beiden Enden zunächst offenen Filterstrümpfe 20 in fertikkonfektionierter Ausführung können auch solche verwendet werden, die an einem Ende fabrikmäßig verschlossen sind. Schließlich ist es auch möglich, statt der Filterstrümpfe 20 ein Filtertuch zu verwenden, welches um die jeweilige Filterröhre 16 herumgewickelt werden kann. Ein solches die Filterröhren 16 umhüllendes Filtertuch wird dann an den oberen und unteren Enden jeder Filterröhre 16 mittels ringförmiger Befestigungselemente fixiert, während sein außenliegender Längsrand mittels einer Verschlußschiene festgelegt werden kann, welche achsparallel zur betreffenden Filterröhre 16 verläuft.

Es wird nun auf die Figuren 5 und 6 Bezug genommen, in welchen eine weitere Ausführungsform eines Filterapparats gemäß der Erfindung gezeigt ist, der jedoch in wesentlichen Teilen der vorstehend beschriebenen Ausführungsform entspricht und gleiche Teile sind daher mit den selben Bezugszahlen gekennzeichnet. Auch dieser Filterapparat enthält einen Druckbehälter 10' mit kreisrundem Querschnitt, in dem eine obere Tragkonstruktion 23' für die Filterröhren 16 drehbar gelagert und motorisch antreibbar ist, während die untere Tragkonstruktion 22' gleich derjenigen in Figur 1 a ortsfest angeordnet ist. Beim Ausführungsbeispiel nach Figur 5 ist in dem Druckbehälter 10' mittig bzw. achsgleich zur lotrechten Hauptachse des Druckbehälters 10' ein Rohr 35 mit relativ großem Durchmesser eingebaut. An diesem Rohr 35 sind außen radial und in Umfangsrichtung in gleichem Abstand voneinander mehrere Streben 36 angeschweißt, an welchen die untere Tragkonstruktion 22' für die Filterröhren 16 befestigt ist. Von dem hohlen Ring 24 erstreckt sich eine Ableitung 37 für das Filtrat durch den Boden 12 nach außen. Die obere Tragkonstruktion 23' ist zur Rotation im Druckbehälter 10' mittels ihrer Hohlwelle 34 auf einem Lager 38 drehbeweglich abgestützt, welches mittig auf einer Platte 39 oder einer ähnlichen Stützeinrichtung befestigt ist, die am oberen Ende des Rohres 35 festgemacht ist. Ferner sind bei dieser Ausführungsform nach Figur 5 die Enden der Filterröhren 16, welche jeweils von den ringförmigen hohlen Tragkonstruktionen 22' bzw. 23' abgelegen sind, durch Stabilisierungsringe 40 bzw. 41 miteinander verbunden.

Das in dem Druckbehälter 10' mittig stehend eingebaute Rohr 35 kann auch beispielsweise aus einem entsprechend gebogenen Lochblech hergestellt sein und dieses kann gleich den Filterröhren 16 außen mit einem Filterüberzug (nicht gezeigt) umhüllt sein. In diesem Fall ist das untere geschlossene Ende des Rohres 35 mit einer Ableitung 42 für das Filtrat versehen, die in die Ableitung 37 einmünden kann.

Zur Zuführung der zu filtrierenden Flüssigkeit in den Druckbehälter 10' sind an der zylindrischen Außenwand bzw. dem Mantel 13 desselben beispielsweise vier Zuleitungsstutzen 43 tangential angeordnet, und zwar in gegenseitigem Abstand von jeweils 90^{o}. Außerdem sind jeweils zwei diagonal einander gegenüberliegende Zuleitungsstutzen 43 in einer Höhe angeordnet, welche beispielsweise ein Drittel bzw. zwei Drittel der Gesamtbauhöhe des Druckbehälters 10' ausmacht. In diesen Zuleitungsstutzen 43 können Düsen 44 eingebaut sein. Durch diese spezielle Anordnung der Zuleitungsstutzen 43 wird eine intensive Verwirbelung der zu filtrierenden Flüssigkeit in dem Druckbehälter 10' bwirkt, so daß das in Figur 1 a gezeigte Rührorgan 6 mit Antrieb entfallen kann. Die zu filtrierende Flüssigkeit wird hier mit entsprechend hohem Druck über die Zuleitungsstutzen 43 in den Druckbehälter 10' eingepumpt.

Bei einer nicht gezeigten Ausführungsform der Erfindung ist der Filterüberzug an den Filterröhren aus einer Keramikschicht gebildet, welche vorteilhaft eine entsprechend lange Standzeit hat. Solche Keramikschichten haben eine für viele Einsatzfälle ausreichende Porosität und können auch durch Rückspülung gereinigt werden.

## Patentansprüche

1. Filterapparat zum Trennen der Feststoffpartikel aus einer Flüssigkeit, mit einem Druckbehälter, in dem hohle, mit einem Filterüberzug versehene Filterelemente zur Aufnahme und Ableitung des Filtrats ineinandergeschachtelt angeordnet sind, von welchen wenigstens ein Teil um die lotrechte Achse des Druckbehälters drehbar gelagert und motorisch antreibbar ist, dadurch gekennzeichnet, daß die Filterelemente aus Filterröhren (16) mit einem relativ kleinen Querschnitt bestehen, die außen mit einem Filterüberzug umhüllt sind.

2. Filterapparat nach Anspruch 1, dadurch gekennzeichnet, daß die Filterröhren (16) vertikal und in Umfangsrichtung in Abstand voneinander auf verschiedenen Radien angeordnet sind.

3. Filterapparat nach Anspruch 1 oder 2, dadurch gekennzeichnet, daß die Filterröhren (16) gleichartig ausgebildet sind.

4. Filterapparat nach einem der Ansprüche 1 - 3, dadurch gekennzeichnet, daß die Filterröhren (16) über ihre gesamte Höhe einen abgeflachten ovalen, tropfenähnlichen oder auch kreisrunden Querschnitt aufweisen.

5. Filterapparat nach einem der Ansprüche 1 - 4, dadurch gekennzeichnet, daß die Filterröhren (16) aus Lochblech hergestellt und an ihren Enden mittels eines Deck- und Bodenelements (17, 18) verschlossen sind, wobei im Deck- oder Bodenelement (17, 18) wenigstens eine Ableitung (19) für das Filtrat vorgesehen ist.

6. Filterapparat nach einem der Ansprüche 1 - 5, dadurch gekennzeichnet, daß die Filterröhren (16) mit ihrem einen die Ableitung(en) (19) für das Filtrat enthaltenden Ende an ringförmigen hohlen Tragkonstruktionen (22, 23) unterschiedlichen Durchmessers befestigt sind, die jeweils über hohle Streben (25, 28) mit einer Hohlwelle (26, 34) bzw. hohlen Achse zur Ableitung des Filtrats verbunden sind.

7. Filterapparat nach Anspruch 1, dadurch gekennzeichnet, daß die Filterüberzüge als Filterstrümpfe (20) ausgebildet sind.

8. Filterapparat nach den Ansprüchen 1 und 7, dadurch gekennzeichnet, daß die Filterstrümpfe (20) an beiden Enden offen und wenigstens an den oberen und unteren Enden der Filterröhren (16) mittels ringförmiger Befestigungselemente, z.B. in der Art von Spannschellen (21) bzw. Spannbänder fixiert sind.

9. Filterapparat nach Anspruch 1, dadurch gekennzeichnet, daß die Filterüberzüge aus einem um die Filterröhren (16) gewickelten Filtertuch bestehen, welches an den oberen und unteren Enden der Filterröhren (16) mittels ringförmiger Befestigungselemente und an seinem außenliegenden Längsrand durch eine achsparallel zur Filterröhre (16) angeordnete Verschlußschiene gehalten ist.

10. Filterapparat nach einem der Ansprüche 1 - 9, dadurch gekennzeichnet, daß in dem Druckbehälter (10') mittig und parallel zu den Filterröhren (16) ein Rohr (35) relativ großen Durchmessers eingebaut ist, an dem außen der stationäre Teil der Filterröhren (16) mittels Streben (36) befestigt ist, während sich der drehbar gelagerte Teil der Filterröhren (16) auf einem von dem Rohr (35) mittig getragenen Lager (38) abstützt.

11. Filterapparat nach Anspruch 10, dadurch gekennzeichnet, daß das in dem Druckbehälter (10') mittig eingebaute Rohr (35) perforiert bzw. aus Lochblech hergestellt und gleichfalls außen mit einem Filterüberzug umhüllt ist, und daß am unteren geschlossenen Ende des Rohres (35) eine Ableitung (42) für das Filtrat angeordnet ist.

12. Filterapparat nach einem der Ansprüche 1 - 11, dadurch gekennzeichent, daß die Einführung der zu filtrierenden Flüssigkeit in den Druckbehälter (10') durch einen oder mehrere an der zylindrischen Außenwand (13) des Druckbehälters (10') tangential befestigten Zuleitungsstutzen (43) erfolgt.

13. Filterapparat nach Anspruch 12, dadurch gekennzeichnet, daß an der zylindrischen Außenwand (13) des Druckbehälters (10') mehrere Zuleitungsstutzen (43) in verschiedener Höhe und in Umfangsrichtung voneinander beabstandet, tangential angeordnet sind.

14. Filterapparat nach Anspruch 6, dadurch gekennzeichnet, daß die Filterröhren (16) an ihren den ringförmigen hohlen Tragkonstruktionen (22', 23') gegenüberliegenden Enden jeweils mit einem Stabilisierungsring (41, 40) verbunden sind.

15. Filterapparat nach Anspruch 1, dadurch gekennzeichnet, daß der Filterüberzug an den Filterröhren aus einer Keramikschicht besteht.
